# EUROPÄISCHE PATENTSCHRIFT

(11) **EP 2 338 780 B1**
(45) Veröffentlichungstag und Bekanntmachung des Hinweises auf die Patenterteilung: **08.02.2017**
(21) Anmeldenummer: 10015996.1
(22) Anmeldetag: 23.12.2010
(51) Int. Cl.: B62M 19/00, F04B 1/00

(54) **Mit Muskelkraft betriebenes Fahrzeug, insbesondere Landfahrzeug**
Vehicle operated by muscle strength, in particular a land based vehicle
Véhicule actionné par la force des muscles, notamment un véhicule terrestre

(30) Priorität: 24.12.2009 DE 102009060453
(43) Veröffentlichungstag der Anmeldung: 29.06.2011
(73) Patentinhaber: Opitz, Hans-Joachim, 30916 Isernhagen (DE)
(72) Erfinder: Opitz, Hans-Joachim, 30916 Isernhagen (DE)
(74) Vertreter: Jabbusch, Matthias

(56) Entgegenhaltungen:
- WO-A1-2005/014386
- DE-A1- 10 164 369
- DE-A1- 19 823 643
- DE-B3-102007 045 014
- US-A- 4 684 143
- US-A- 5 387 000
- US-A1- 2007 126 284
- US-B1- 6 315 313

## Beschreibung

Die Erfindung betrifft ein mit Muskelkraft betriebenes Fahrzeug, insbesondere Landfahrzeug, mit einer Kraft-Einleitungs- und Übertragungseinrichtung, umfassend wenigstens einen Pedalkurbeltrieb und Mittel zum Übertragen der Kraft auf ein der Fortbewegung dienendes Fahrzeugteil, insbesondere ein Fahrzeugrad, wobei dem Pedalkurbeltrieb Kolben-Zylinderanordnungen für ein druckübertragendes Medium zugeordnet sind, wobei die Kolben-Zylinderanordnungen radial zueinander angeordnet sind und über Druckmediumleitungen mit einer mit dem Fahrzeugteil drehfest verbundenen Druckabnahmeeinrichtung verbunden sind.

Neben mit Verbrennungs- bzw. Elektromotoren angetriebenen Fahrzeugen sind mit Muskelkraft betriebene Fahrzeuge bekannt. Diese Fahrzeuge sind beispielsweise Fahrräder, Tretautos für Kinder oder Tretboote sowie Krankenfahrstühle und dergleichen. Derartige mit Muskelkraft betriebene Fahrzeuge weisen regelmäßig eine Kraft-Einleitungs- und Übertragungseinrichtung auf, mit der die aufgebrachte Muskelkraft in eine Fortbewegung des Fahrzeuges umgesetzt wird.

Regelmäßig ist eine derartige Kraft-Einleitungs- und Übertragungseinrichtung als Pedalkurbeltrieb ausgebildet. Bei Fahrrädern hat sich der Pedalkurbeltrieb als sinnvollste Einleitung von Beinkräften in die Kraft-Einleitungs- und Übertragungseinrichtung herausgebildet, regelmäßig wird die Kraft vom Pedalkurbeltrieb auf ein Hinterrad des Fahrrades übertragen. Dazu dient regelmäßig eine Kette, es wurden auch schon Kardanwellen oder andere mechanische Übertragungsmittel vorgeschlagen. Mit einer derartigen Kette oder mit anderen mechanischen Übertragungsmitteln wird die Kraft auf ein der Fortbewegung dienendes Fahrzeugteil übertragen, beispielsweise auf das hintere Rad eines Fahrrades.

Auch wenn der Einsatz einer Kette sich beim Fahrrad als regelmäßiges Kraftübertragungsmittel herausgestellt hat, hat dieses Kraftübertragungsmittel Nachteile. Eine Kette ist einzufetten, dadurch kann die Bekleidung des das Fahrrad Benutzenden verschmutzt werden. Zudem tritt es auf, dass eine Kette sich ausdehnt also längen kann, hier sind entweder Kettenspannmaßnahmen vorzuhalten oder es ist die Kette regelmäßig nachzuspannen.

Ein mit Muskelkraft betriebenes Fahrzeug nach dem Oberbegriff des Anspruchs 1 ist aus der WO 2005/014386 A1 bekannt. Die Kraft-Einleitungs- und Übertragungseinrichtung dieses Fahrzeuges weist eine mit dem Hinterrad eines Fahrrades drehfest verbundene Druckabnahmeeinrichtung auf. iese ist als exzentrisch angeordnete Kurvenscheibe ausgebildet. Eine Anpassung der einzusetzenden Vortriebskraft bzw. der mit einem bestimmten Kraftaufwand erreichbaren Vortriebsstrecke ist nicht möglich.

Der Erfindung liegt die Aufgabe zugrunde, ein mit Muskelkraft betriebenes Fahrzeug der eingangs genannten Gattung aufzuzeigen, das eine effiziente Kraft-Einleitungs- und Übertragungseinrichtung aufweist, die zudem wartungsarm ist und die voneinander verschiedene Fahrzeugzustände des Fahrzeugs ermöglicht.

Diese Aufgabe ist erfindungsgemäß dadurch gelöst, dass die Druckabnahmeeinrichtung zumindest ein Flügelrad aufweist, dass das Flügelrad in einem Gehäuse aufgenommen ist und zumindest zwei Kammern aufweist, welche durch einen um das Flügelrad umlaufenden Steg voneinander getrennt sind und im Zuführweg der Druckmediumleitung zum Flügelrad ein die Befüllung der Kammern des Flügelrades beeinflussendes Ventil angeordnet ist.

Am Ende der Druckmediumleitungen ist die Druckabnahmeeinrichtung angeordnet, sie ist beispielsweise dem Hinterrad eines Fahrrades zugeordnet. Die Erfindung sieht vor, dass sie zumindest ein Flügelrad aufweist. Auf das Flügelrad wird das unter Druck gesetzte Medium geführt, dadurch wird eine Drehung des Flügelrades erreicht. Dieses ist drehfest mit dem zum Beispiel Hinterrad eines Fahrrades verbunden, wodurch die gewünschte Drehung des Hinterrades auftritt.

Nach der Erfindung ist vorgesehen, dass das Flügelrad in einem Gehäuse aufgenommen ist und zumindest zwei Kammern aufweist, welche durch einen um das Flügelrad umlaufenden Steg voneinander getrennt sind. Die Aufteilung des Flügelrades in voneinander getrennte Kammern ermöglicht ein Einrichten von verschiedenen Fahrzuständen, äquivalent zu den Gangstufen eines herkömmlichen Ketten- bzw. Nabengetriebes. Dazu wird beispielsweise lediglich in eine Kammer oder in die andere Kammer oder in beide Kammern ein Druckmedium eingefüllt. Vorzugsweise sind beide Kammern voreinander verschieden groß, so dass auch hier eine Auswahl stattfinden kann.

Um das Druckmedium in die eine oder in die andere oder in beide Kammern einzuführen, ist nach der Erfindung noch vorgesehen, dass im Zuführweg der Druckmediumleitung zum Flügelrad ein die Befüllung der Kammern des Flügelrades beeinflussendes Ventil angeordnet ist. Mit diesem Ventil ist es möglich, beispielsweise nur eine Kammer zu befüllen. Bei dieser Befüllung ist bei einem Fahrrad ein kleineres Drehmoment übertragbar, jedoch eine schnellere Fahrt zu ermöglichen. Wird dagegen das Druckmedium in beide Kammern eingeführt, wird ein höheres Drehmoment übertragen, was vorteilhaft für eine Bergfahrt ist.

Wenn in einem Beispiel angenommen wird, dass das Fahrzeug ein Fahrrad ist, so kann durch die Beine eines Fahrradfahrers eine Kraft von 150 Newton an den Pedalarmen angelegt werden. Durch die Kolben-Zylinderanordnung ist dann ein hydraulischer Betriebsdruck von etwa 33 bar herstellbar. Bei 60 Pedalumdrehungen in der Minute kann daraus eine Fahr-Geschwindigkeit von 29 km/h resultieren. Wird das Drehmoment durch eine Verteilung des Druckmittels auf mehr Kammern erhöht, reduziert sich die Geschwindigkeit beispielweise auf 23 km/h, das Drehmoment wird jedoch um etwa 60 % erhöht.

Das Ventil weist vorzugsweise einen Stellflügel auf, der schwenkbar gelagert ist, wobei diese Lagerung durch einen Schwenkantrieb beaufschlagt ist. Der Stellflügel kann das Druckmedium in die verschiedenen Kammern einleiten.

Zur weiteren Ausbildung der Erfindung ist vorgesehen, dass dem Schwenkantrieb ein Bowdenzug zugeordnet ist. Dieser Bowdenzug kann beispielsweise bei einem Fahrrad zum Lenker geführt werden, um dem Fahrradfahrer eine bequeme Einstellmöglichkeit zur Veränderung des Drehmomentes des Antriebes anzubieten.

Schließlich ist es möglich, dass in die radiale Oberfläche des Flügelrades Dichtungen eingelassen sind. Auch hier erfolgt eine Unterteilung der radialen Oberfläche des Flügelrades in einzelne Abschnitte, die durch Dichtungen voneinander getrennt sind. Jede Dichtung kann dabei wieder federbelastet sein.

Das erfindungsgemäße Fahrzeug ist nicht mit einer Kette oder einer anderen mechanischen Einrichtung zum Übertragen der in den Pedalkurbeltrieb eingebrachten Muskelkraft ausgestattet. Vielmehr werden Kolben-Zylinderanordnungen vorgesehen, mit denen ein druckübertragendes Medium unter Druck gesetzt wird, dieser Druck wird anschließend über die Druckmediumleitungen an ein Fahrzeugteil übertragen.

Die Kolben-Zylinderanordnungen sind radial zueinander angeordnet, das bedeutet, dass die einzelnen Kolben auf einem Kreisbogen angeordnet sind. Die Kolben werden durch den Pedalkurbeltrieb in ihren Zylindern verschoben, dadurch wird ein Druckmedium, beispielsweise ein Hydrauliköl, kompressiert. Die Kompression wird über eine Druckmediumleitung an die mit dem Fahrzeugteil drehfest verbundene Druckabnahme einer Richtung übertragen und von dieser auf das Fahrzeugteil, beispielsweise ein Rad oder die Schiffsschraube eines Tretbootes, übertragen. Wenn Kolben in die Zylinder eingezogen werden, kann auf der anderen Seite ein Unterdruck erzeugt werden, der über eine andere Druckmediumleitung das Medium wieder in den Bereich Kolben-Zylinderanordnungen zurücktransportiert, um es anschließend erneut unter Druck zu setzen. Die Kolben-Zylinderanordnungen im Bereich des Pedalkurbeltriebes bilden eine Radial-Kolbenpumpe aus, während die Druckabnahmeeinrichtung als Hydraulikmotor ausgebildet ist.

Die Nachteile des Einsatzes einer Kette entfallen. Die Druckmediumleitungen können sich nicht längen, zudem ist bei dem erfindungsgemäßen Fahrzeug das Druckmedium so abschließbar, dass eine Verschmutzung von Bekleidungsstücken des das Fahrzeug Benutzenden nicht auftritt. Darüber hinaus ist über das Druckmedium ein Drehmoment übertragbar, das eine schnelle zum Beispiel Fahrradfahrt ermöglichen kann.

Nach einer ersten Weiterbildung der Erfindung ist vorgesehen, dass die Kolben-Zylinderanordnungen in einem Gehäuse angeordnet sind, das in eine Druckseite und in eine Saugseite unterteilt ist, wobei Druckmediumleitungen an beiden Seiten des Gehäuses angeschlossen sind. In dem Bereich, wo das Druckmedium durch die Kolben aus den Zylindern herausgepresst wird, ist die Druckseite des Gehäuses. Das Öl tritt aus den Kolben in das Gehäuse ein und wird aus diesem über eine an diesem Bereich des Gehäuses angeschlossene Druckmediumleitung aus dem Gehäuse herausgeführt. In anderen Bereichen werden die Kolben in die Zylinder eingezogen, dies kann dafür genutzt werden, Medium in die Zylinder einzuziehen. Dies erfolgt auf der Saugseite, auch an dieser Seite ist eine Druckmediumleitung angeschlossen.

Die radiale Anordnung der Kolben-Zylinderanordnungen ermöglicht es, die Welle des Pedalkurbeltriebes durch das Gehäuse hindurch zu führen und auf der Welle eine Aufnahme für die Kolben-Zylinderanordnungen anzuordnen. Die Kolben-Zylinderanordnungen werden auf diese Weise mit der Welle des Pedalkurbeltriebes drehfest verbunden, die Öffnungen der Zylinder sind dabei nach außen gerichtet. Wird also ein Kolben in einem dieser Zylinder eingezogen, also nach innen geführt, zieht er das Medium in den Zylinder. Wird der Kolben wieder aus dem Zylinder herausgeschoben, drückt er das Medium aus dem Zylinder heraus.

Für diese Bewegung der Kolben sieht eine Weiterbildung der Erfindung vor, dass in einer Gehäusewandung eine Exzentereinrichtung drehfest angeordnet ist, auf der die Kolben der Kolben-Zylinderanordnungen aufstehen. Durch die Drehung der Kolben-Zylinderanordnungen werden die auf der Exzentereinrichtung aufstehenden Kolben über den Exzenter bewegt. Aufgrund der exzentrischen Ausgestaltung wird ein Kolben dann in voneinander verschiedenen Abschnitten dieser Drehbewegung verschieden weit in den Zylinder hineingeschoben bzw. aus dem Zylinder herausgezogen. Der Exzenter ist beispielsweise als Exzenterring ausgebildet, die Kolben können an ihren dem Exzenter zugeordneten Enden Kugellager aufweisen, mit denen sie auf der Exzentereinrichtung aufstehen. Im Gehäuse ist insgesamt ein zum Beispiel Ölmedium vorhanden, um einen leichtgängigen Lauf der beweglichen Bauteile zu ermöglichen.

Vorzugsweise kann vorgesehen sein, dass den Kolben- Zylinderanordnungen Dichtungen zugeordnet sind. Die Dichtungen unterteilen die einzelnen Abschnitte der Kolben und dichten die den Kolben zugeordneten Hubräume voneinander ab. Auf der Druckseite des Gehäuses werden die Kolben in die Zylinder hineingedrückt, während auf der Saugseite die Kolben wieder aus den Zylindern hinaustreten. Die einzelnen Kolben-Zylinderanordnungen sind dabei durch die Dichtungen voneinander getrennt. Jeder Kolben kann von zwei federbelasteten Dichtungen eingefasst sein.

Ein Ausführungsbeispiel der Erfindung, aus dem sich weitere erfinderische Merkmale ergeben, ist in der Zeichnung dargestellt. Es zeigen:
- Fig. 1: eine perspektivische Ansicht eines Fahrrades mit einer erfindungsgemäßen Kraft-Einleitungs- und Übertragungseinrichtung,
- Fig. 2: eine Seitenansicht eines Bauteils des Fahrrades gemäß Figur 1,
- Fig. 3: eine perspektivische Ansicht eines weiteren Bauteils des Fahrrades gemäß Figur 1 und
- Fig. 4 u. 5: Schnittansichten des Bauteils gemäß Figur 3.

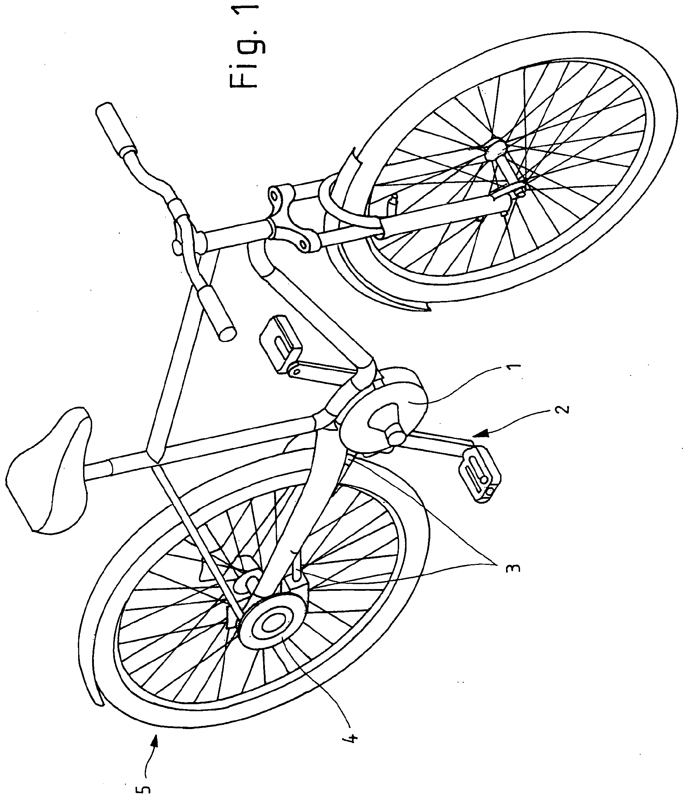

Das Fahrrad in Figur 1 ist wie ein gewöhnliches Fahrrad mit einem Rahmen, Laufrädern, einem Sattel sowie einem Lenker ausgebildet. Das Fahrrad weist jedoch keine mit einer Kette ausgerüstete Kraft-Einleitungs- und Übertragungseinrichtung auf, sondern ein Gehäuse 1, durch das der Pedalkurbeltrieb 2 mit einer Welle hindurch geführt ist. Von dem Gehäuse 1 verlaufen Druckmediumleitungen 3 zu einem weiteren Gehäuse 4, das der Nabe des Hinterrades 5 des Fahrrades zugeordnet ist.

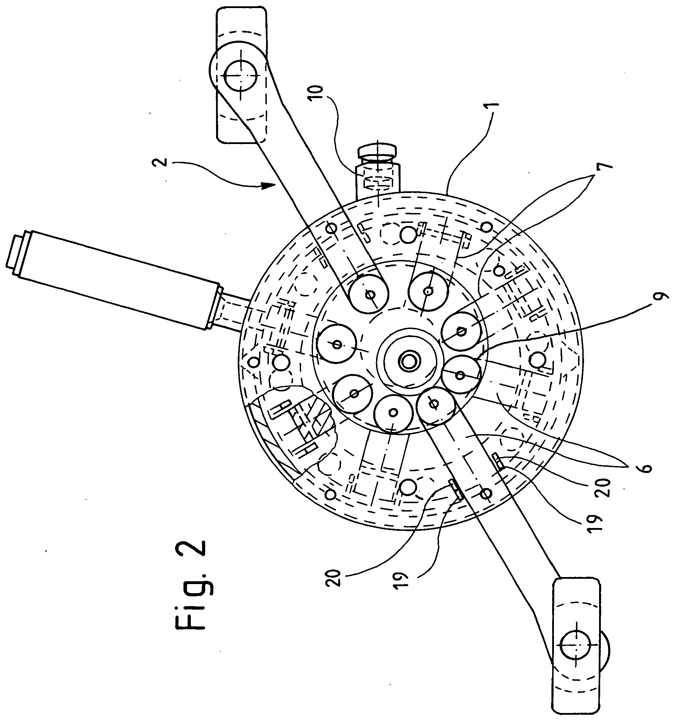

Figur 2 zeigt, dass im Inneren des dem Pedalkurbeltrieb 2 zugeordneten Gehäuses 1 Kolben 6 angeordnet sind, die in Zylindern 7 aufgenommen sind. Es sind acht Kolben-Zylinderanordnungen vorgesehen, die radial zueinander angeordnet sind. Die Zylinder 7 mit den Kolben 6 sind mit dem Pedalkurbeltrieb 2 drehfest verbunden, durch Einleiten einer Muskelkraft in den Pedalkurbeltrieb 2 werden die Kolben-Zylinderanordnungen im Gehäuse 1 gedreht.

Dabei werden die Kolben 6 über Kugellager entlang eines im Gehäuse 1 drehfest angeordneten Exzenterrings geführt. Die Kolben 6 stehen über Kugellager 9 auf dem Exzenterring auf und werden durch diesen in den Zylindern 7 bewegt. In dem in Figur 2 unteren Bereich erfolgt ein Einschieben der Kolben 6 in die Zylinder 7. Dadurch wird in die Zylinder ein Druckmedium eingezogen, das dem Gehäuse 1 über einen Anschluss 10 einer Druckmediumleitung 3 ausgehend vom Hinterrad 5 zugeführt wird. Bei weiterer Kurbeldrehung werden die Kolben-Zylinderanordnungen über eine Trennung innerhalb des Gehäuses 1 einzeln weggeführt und gelangen in den oberen Bereich in Figur 2, in dem die Kolben 6 durch den Exzenterring aus den Zylindern 7 herausgedrückt werden. Das von den Kolben 6 herausgedrückte Druckmedium wird in einen weiteren nicht dargestellten Anschluss geführt, an den wiederum eine Druckmediumleitung 3 anschließbar ist, welche in Richtung Hinterrad 5 verläuft.

Jeder Kolben 6 und Zylinder 7 ist von zwei Dichtungen 19 eingefasst. Jeder Dichtung 19 ist eine Druckfeder 20 zugeordnet. Die Dichtungen 19 sind jeweils aus einer Lamelle ausgebildet, welche an ihrer Außenseite eine gegen das Gehäuse 1 führbare Dichtfläche aufweist.

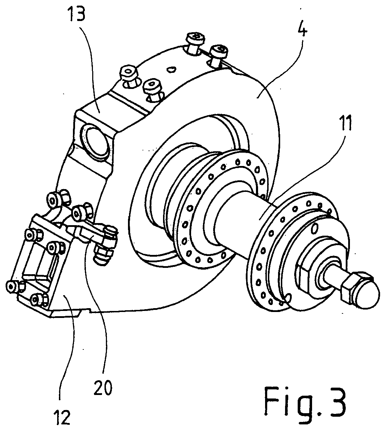

Figur 3 zeigt das Gehäuse 4, das dem Hinterrad 5 zugeordnet ist. Dem Gehäuse 4 ist die Nabe 11 des Hinterrades 5 zugeordnet, hier kann ein einfaches formschlüssiges Einstecken vorgesehen sein, um trotz der Ausrüstung des Fahrrades mit einem hydraulischen Antrieb ein leichtes Ein- und Ausbauen des Hinterrades 5 zu ermöglichen.

Das Gehäuse 4 hat einen druckseitigen Anschluss 12 sowie einen saugseitigen Anschluss 13 für die Druckmediumleitungen 3.

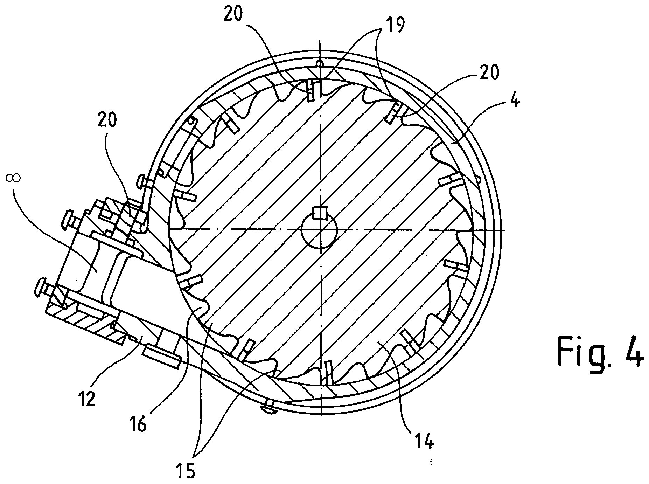

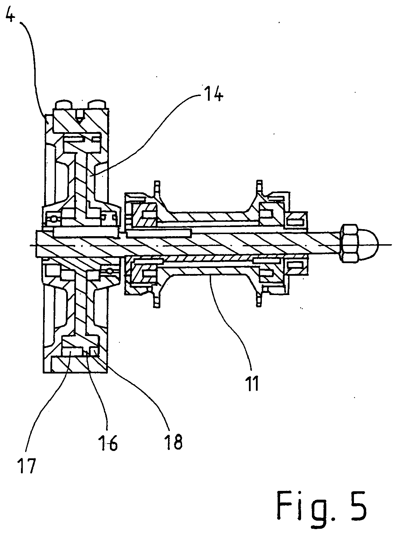

Figuren 4 und 5 zeigen, däss im Gehäuse 4 ein Flügelrad 14 als Druckabnahmeeinrichtung angeordnet ist. Dieses Flügelrad 14 ist drehfest mit der Nabe 11 verbunden. Das Flügelrad 14 hat einzelne Flügel 15, die von den Flügeln 15 ausgebildeten Kammern sind durch einen um das Flügelrad 14 umlaufenden Steg 16 voneinander getrennt. Dieser Steg 16 ist in Figur 5 zu erkennen, er trennt die größere Kammer 17 von der kleineren Kammer 18.

Figur 4 zeigt noch, dass im Zuführweg im Bereich des Anschlusses 12 ein Ventil angeordnet ist. Dieses Ventil umfasst einen Stellflügel 8 der schwenkbar gelagert ist. Die schwenkbare Lagerung ist von einem Stellantrieb 20 beaufschlagt, dieser ist auch in Figur 3 gezeigt. An dem Schwenkantrieb 20 ist ein Bowdenzug anschließbar, der zum Lenker des Fahrrades geführt werden kann.

Auch in das Flügelrad 14 sind Dichtungen 19 eingelassen. Sie sind mit Druckfedern 20 belastet

## Patentansprüche

1. Mit Muskelkraft betriebenes Fahrzeug, insbesondere Landfahrzeug, mit einer Kraft-Einleitungs- und Übertragungseinrichtung, umfassend wenigstens einen Pedalkurbeltrieb (2) und Mittel zum Übertragen der Kraft auf ein der Fortbewegung dienendes Fahrzeugteil, insbesondere ein Fahrzeugrad, wobei dem Pedalkurbeltrieb (2) Kolben-Zylinderanordnungen für ein druckübertragendes Medium zugeordnet sind und wobei die Kolben-Zylinderanordnungen radial zueinander angeordnet sind und über Druckmediumleitungen (3) mit einer mit dem Fahrzeugteil (5) drehfest verbundenen Druckabnahmeeinrichtung verbunden sind,
**dadurch gekennzeichnet,**
**dass** die Druckabnahmeeinrichtung zumindest ein Flügelrad (14) aufweist, dass das Flügelrad (14) in einem Gehäuse (4) aufgenommen ist und zumindest zwei Kammern (17, 18) aufweist, welche durch einen um das Flügelrad (14) umlaufenden Steg (16) voneinander getrennt sind und
**dass** im Zuführweg der Druckmediumleitung (3) zum Flügelrad (14) ein die Befüllung der Kammern (17, 18) des Flügelrades (14) beeinflussendes Ventil angeordnet ist.

2. Fahrzeug nach Anspruch 1, **dadurch gekennzeichnet, dass** das Ventil einen Stellflügel (8) aufweist, der schwenkbar gelagert ist, wobei diese Lagerung durch einen Schwenkantrieb (20) beaufschlagt ist.

3. Fahrzeug nach Anspruch 2, **dadurch gekennzeichnet, dass** der Schwenkantrieb (20) einen Bowdenzug umfasst.

4. Fahrzeug nach einem der vorhergehenden Ansprüche, **dadurch gekennzeichnet, dass** in die radiale Oberfläche des Flügelrades (14) Dichtungen (19) eingelassen sind.

5. Fahrzeug nach Anspruch 4, **dadurch gekennzeichnet, dass** jede Dichtung (19) federbelastet ist.

6. Fahrzeug nach einem der vorhergehenden Ansprüche, **dadurch gekennzeichnet, dass** die Kolben-Zylinderanordnungen in einem Gehäuse (1) angeordnet sind, das in eine Druckseite und in eine Saugseite unterteilt ist, wobei Druckmediumleitungen (3) an beiden Seiten des Gehäuses (1) angeschlossen sind.

7. Fahrzeug nach einem der vorhergehenden Ansprüche, **dadurch gekennzeichnet, dass** die Welle des Pedalkurbeltriebes (2) durch das Gehäuse (1) geführt ist und dass die Welle eine Aufnahme für die Kolben-Zylinderanordnungen trägt.

8. Fahrzeug nach Anspruch 7, **dadurch gekennzeichnet, dass** den Kolben-Zylinderanordnungen Dichtungen (19) zugeordnet sind.

9. Fahrzeug nach Anspruch 8, **dadurch gekennzeichnet, dass** jeder Kolben (6) von zwei federbelasteten Dichtungen (19) eingefasst ist.

10. Fahrzeug nach einem der Ansprüche 7 bis 9, **dadurch gekennzeichnet, dass** in einer Gehäusewandung eine Exzentereinrichtung drehfest angeordnet ist, auf der die Kolben (6) der Kolben-Zylinderanordnungen aufstehen.

11. Fahrzeug nach Anspruch 10, **dadurch gekennzeichnet, dass** zwischen der Exzentereinrichtung und den Kolben (6) Kugellager (9) angeordnet sind.

## Claims

1. A vehicle, in particular land vehicle, operated with muscular force, with a force introduction and transmission device, comprising at least one pedal crank drive (2) and means for transmitting the force to a vehicle part used for forward movement, in particular a vehicle wheel, the pedal crank drive (2) being assigned piston-cylinder arrangements for a pressure-transmitting medium and the piston-cylinder arrangements being arranged radially to each other and being connected via pressure medium lines (3) to a pressure reduction device, which is connected in a rotationally fixed manner to the vehicle part (5),
**characterised in that**
the pressure reduction device has at least one impeller (14),
that the impeller (14) is accommodated in a housing (4) and has at least two chambers (17, 18), which are separated from each other by a web (16) that runs around the impeller (14), and
that a valve is arranged in the supply path of the pressure medium line (3) to the impeller (14), said valve influencing the filling of the chambers (17, 18) of the impeller (14).

2. The vehicle according to Claim 1, **characterised in that** the valve has a control vane (8), which is pivotably mounted, said mounting being loaded by a slewing drive (20).

3. The vehicle according to Claim 2, **characterised in that** the slewing drive (20) comprises a Bowden cable.

4. The vehicle according to any one of the preceding claims, **characterised in that** seals (19) are let into the radial surface of the impeller (14).

5. The vehicle according to Claim 4, **characterised in that** each seal (19) is spring-loaded.

6. The vehicle according to any one of the preceding claims, **characterised in that** the piston-cylinder arrangements are arranged in a housing (1), which is divided into a pressure side and a suction side, pressure medium lines (3) being attached to both sides of the housing (1).

7. The vehicle according to any one of the preceding claims, **characterised in that** the shaft of the pedal crank drive (2) is guided through the housing (1) and that the shaft bears a receptacle for the piston-cylinder arrangements.

8. The vehicle according to Claim 7, **characterised in that** the piston-cylinder arrangements are assigned seals (19).

9. The vehicle according to Claim 8, **characterised in that** each piston (6) is surrounded by two spring-loaded seals (19).

10. The vehicle according to any one of Claims 7 to 9, **characterised in that** an eccentric device, on which the pistons (6) of the piston-cylinder arrangements stand, is arranged in a rotationally fixed manner in a housing wall.

11. The vehicle according to Claim 10, **characterised in that** ball bearings (9) are arranged between the eccentric device and the pistons (6).

## Revendications

1. Véhicule actionné par la force des muscles, notamment véhicule terrestre, comportant un dispositif de conduction et de transfert de force comprenant au moins un mécanisme de pédale à manivelle (2) et des moyens de transfert de la force à un élément de véhicule servant à assurer le déplacement, en particulier une roue de véhicule, des dispositifs à piston/cylindre pour un fluide transférant la pression étant associés au mécanisme de pédale à manivelle (2) et les mécanismes piston/cylindre étant disposés radialement les uns par rapport aux autres et raccordés par des conduites de fluide sous pression (3) à un dispositif de réduction de pression relié de manière fixe en rotation à l'élément de véhicule (5),
**caractérisé en ce que**
le dispositif de réduction de pression présente au moins une roue à aube (14),
que la roue à aube (14) est reçue dans une enceinte (4) et présente au moins deux cellules (17, 18) qui sont séparées l'une de l'autre par une traverse (16) entourant la roue à aube (14) et
que, dans la voie d'acheminement de la conduite de fluide sous pression (3) vers la roue à aube (14), une soupape jouant sur le remplissage des cellules (17, 18) de la roue à aube (14) est disposée.

2. Véhicule selon la revendication 1, **caractérisé en ce que** la soupape présente un volet de régulation qui s'appuie en rotation, ce palier étant sollicité par une commande de pivotement (20).

3. Véhicule selon la revendication 2, **caractérisé en ce que** la commande de pivotement (20) comprend un câble Bowden.

4. Véhicule selon une des revendications précédentes, **caractérisé en ce que** des joints (19) sont encastrés dans la surface radiale de la roue à aube (14).

5. Véhicule selon la revendication 4, **caractérisé en ce que** chaque joint (19) est chargé par ressort.

6. Véhicule selon une des revendications précédentes, **caractérisé en ce que** les dispositifs à piston/cylindre sont disposés dans une enceinte (1) qui est divisée en un côté pression et un côté aspiration, des conduites de fluide sous pression (3) étant raccordées aux deux faces de l'enceinte (1).

7. Véhicule selon une des revendications précédentes, **caractérisé en ce que** l'arbre du mécanisme de pédale à manivelle (2) est guidé à travers l'enceinte (1) et que l'arbre supporte un support pour les dispositifs à piston/cylindre.

8. Véhicule selon la revendication 7, **caractérisé en ce que** des joints sont associés aux dispositifs à piston/cylindre (19).

9. Véhicule selon la revendication 8, **caractérisé en ce que** chaque piston (6) est enserré par deux joints chargés par ressort (19).

10. Véhicule selon une des revendications 7 à 9, **caractérisé en ce qu'**est disposé de manière fixe en rotation, dans une paroi de l'enceinte, un dispositif d'excentrique sur lequel les pistons (6) des dispositifs à piston/cylindre sont posés.

11. Véhicule selon la revendication 10, **caractérisé en ce que**, entre le dispositif d'excentrique et les pistons (6), des roulements à billes (9) sont disposés.
